# EUROPÄISCHE PATENTSCHRIFT

(11) **EP 1 295 663 B1**
(45) Veröffentlichungstag und Bekanntmachung des Hinweises auf die Patenterteilung: **23.05.2007**
(21) Anmeldenummer: 01122792.3
(22) Anmeldetag: 21.09.2001
(51) Int. Cl.: B23H 7/08

(54) **Drahtelektrode mit strukturierter Grenzfläche**
Wire electrode having a structured intermediate layer
Fil-électrode ayant une surface intermédiare structurée

(43) Veröffentlichungstag der Anmeldung: 26.03.2003
(73) Patentinhaber: Berkenhoff GmbH, 35452 Heuchelheim (DE)
(72) Erfinder: Groos, Heinrich, 35745 Herborn (DE); Barthel, Bernd, 35745 Herborn (DE); Nöthe, Tobias, 35745 Herborn (DE); Dietrich, Christoph, 35745 Herborn (DE)
(74) Vertreter: Böck, Bernhard

(56) Entgegenhaltungen:
- GB-A- 2 087 778
- PATENT ABSTRACTS OF JAPAN vol. 015, no. 190 (M-1113), 16. Mai 1991 (1991-05-16) -& JP 03 049829 A (SUMITOMO ELECTRIC IND LTD), 4. März 1991 (1991-03-04)
- PATENT ABSTRACTS OF JAPAN vol. 006, no. 036 (M-115), 5. März 1982 (1982-03-05) -& JP 56 152531 A (MITSUBISHI ELECTRIC CORP), 26. November 1981 (1981-11-26)

## Beschreibung

Die Erfindung betrifft eine Drahtelektrode zum funkenerosiven Schneiden von Metallen, elektrisch leitender Keramik etc. mit entweder einem homogenen Kern aus einem Metall oder einer Metalllegierung oder einem Verbundkern und mit mindestens einer beim Erodieren verschleißenden Mantelschicht.

Das Dokument JP 03049829, welches als nächtsliegender Stand der Technik anzusehen ist, zeigt eine derartige Drahtelektrode.

Beim Einsatz von Drahtelektroden hat es sich gezeigt, dass mit Mantelschichten versehene Drahtelektroden, wobei die Mantelschicht z. B. aus β- oder γ-Messing besteht, eine bessere Schneidleistung aufweisen als Elektroden ohne derartige Mantelschichten. Dies beruht darauf, dass in der β/γ-Mantelschicht ein hoher Zinkanteil enthalten ist, welcher in das Gefüge eingebettet ist. Der Nachteil derartiger mit β- oder auch γ-Messing-Mantelschichten versehene Drahtelektroden ist der, dass die Mantelschicht mit ihrem kubisch raumzentrierten Gitter wesentlich schlechter verformbar ist als der üblicherweise aus einem kubisch flächenzentrierten α-Messing bestehende Kern, was zur Folge hat, dass die Oberfläche einer derartigen Mantelelektrode stellenweise aufreißt. Hierbei bilden sich Risse, die, wie Untersuchungen zeigen, in einer Hinsicht einen gewissen Vorteil haben, da hierdurch das Ausräumen des Schneidspaltes offensichtlich begünstigt wird, so dass mit derartigen Elektroden mit rauher Oberfläche bei höheren Werkstücken größere Schneidleistungen erreichbar sind. Der Nachteil derartiger Drahtelektroden besteht jedoch darin, dass aufgrund der unregelmäßigen und zerklüfteten harten Oberfläche die Drahtführungen wie auch der Stromübergang auf den Draht beeinträchtigt wird. Zum Einen ist eine derartige Mantelschicht sehr rauh und auch hart, so dass die Führungen relativ schnell verschleißen und zum Anderen werden auch Vibrationen im Draht erzeugt, die den Stromübergang gleichermaßen weiter beeinträchtigen. Nachteilig sind diese Vibrationen auch für die Drahtführung im Spalt, da die Drahtelektrode zu Schwingungen angeregt wird, welche zu Kurzschlüssen führen können.

Der Erfindung liegt die Aufgabe zugrunde, eine Drahtelektrode der eingangs genannten Art so auszubilden, dass die durch die zerklüftete Oberfläche in der Mantelschicht erzielten Vorteile der gesteigerten Schneidleistung beibehalten werden, ohne die Nachteile des schlechteren Stromüberganges wie auch des größeren Verschleißes und der erhöhten Schwingungen im Draht in Kauf nehmen zu müssen. Eine weitere Aufgabe der Erfindung besteht darin, eine derartige Elektrode mit einer Oberflächenstruktur zu versehen, die zu einer weiteren Leistungssteigerung führt.

Diese Aufgabe wird erfindungsgemäß dadurch gelöst, dass die Oberfläche der äußeren Mantelschicht strukturiert ausgebildet ist und dass die durch die Strukturierung geschaffenen Vertiefungen mit einem Füllmaterial aus einem leicht verdampfbaren Metall bzw. mit einer Metalllegierung zur Erzielung einer Oberfläche mit geringer Rauhtiefe ausgefüllt sind.

Füllt man die bei der Herstellung von beschichteten Drahtelektroden entstehenden Risse in der Mantelschicht mit einem leicht verdampfenden Metall oder einer Metalllegierung aus, welche aus Zink oder einer Zinklegierung besteht, wobei der Zinkanteil in der Legierung deutlich höher als der in der Mantelschicht sein sollte, so erhält man eine Drahtelektrode mit einer äußerlich glatten Oberfläche, die mit einem nur geringfügigen Verschleiß in den Drahtführungen transportiert werden kann und bei der auch die gesamte anliegende Oberfläche zur Stromübertragung herangezogen werden kann, wobei Unregelmäßigkeiten, die zu Vibrationen führen können und den Stromübergang beeinträchtigen, vermieden werden. Hierdurch ist es möglich, den Stromeintrag in die Elektrode wesentlich zu steigern. Das sich in den Rissen bzw. Rillen befindliche Füllmaterial verbraucht sich beim anschließenden Erodiervorgang im Schneidspalt zuerst, so dass über den überwiegenden Teil der Länge des Schneidspaltes eine Mantelschicht für den Erodiervorgang zur Verfügung steht, die eine stark zerklüftete Oberfläche aufweist. Durch diese zerklüftete Oberfläche wird zum Einen der Austrag des erodierten Materials begünstigt und zum Anderen werden durch die Vorsprünge Feldstärkespitzen erzeugt und damit Orte mit erhöhter Entladungswahrscheinlichkeit und verbunden hiermit eine Erhöhung der Entladefrequenz.

Bei der normalen Drahtfertigung, bei der aufgrund des unterschiedlichen Verformungsverhaltens von Kern und Mantelschicht Risse in der Mantelschicht auftreten, werden diese Orte mit erhöhten Feldstärkenspitzen rein zufällig erzeugt. Versieht man jedoch die Oberfläche der Mantelschicht mit Rillen, die längs, quer, schraubenförmig oder auch sich kreuzend ausgebildet sein können, so werden gezielt derartige Orte mit erhöhter Entladungswahrscheinlichkeit zur Verfügung gestellt, was den Erodiervorgang auch aus dem Grund wesentlich beschleunigt, weil hier die Wahrscheinlichkeit wesentlich größer ist, dass die Entladung nicht in dem Krater einer bereits kurz zuvor erzeugten Entladung stattfindet. Durch die strukturierte Oberfläche wird somit eine gleichmäßigere Entladungsverteilung erreicht, was auch zu einer Minderung des Drahtbruchrisikos führt. Diese Rillen bzw. Vertiefungen sind mindestens 2 µm und maximal 50 µm tief.

Ein weiterer hierdurch erreichter Vorteil, der in der Vermeidung lokaler Entladungsanhäufungen liegt, besteht darin, dass die Entladungen häufiger von einer flüssigen Dielektrikum umgeben sind, anstatt von einer Gasblase. Durch die hiermit verbundene stärkere Einschnürung des Plasmakanals entsteht ein höherer Abtrag pro Entladung, was sich deutlich positiv auf die Schneidleistung der Drahtelektrode auswirkt.

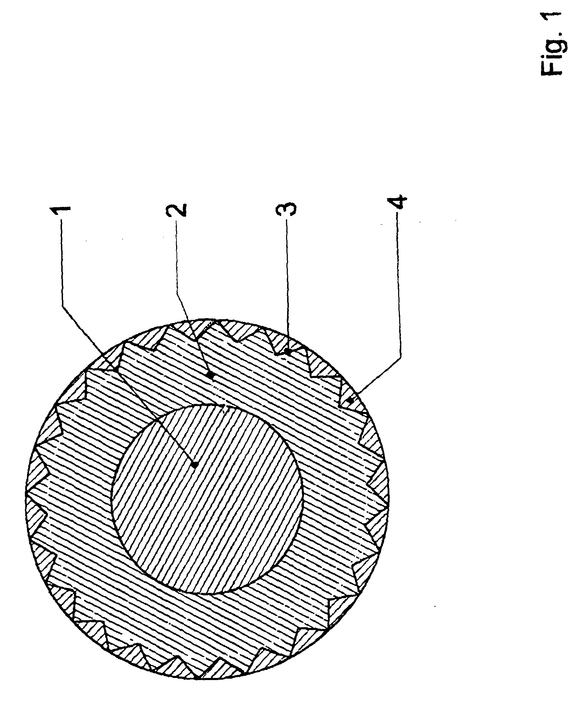

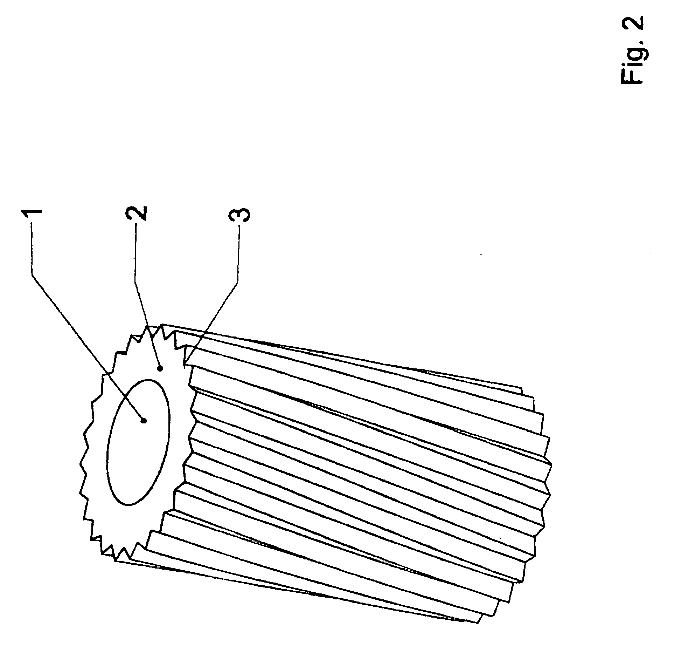

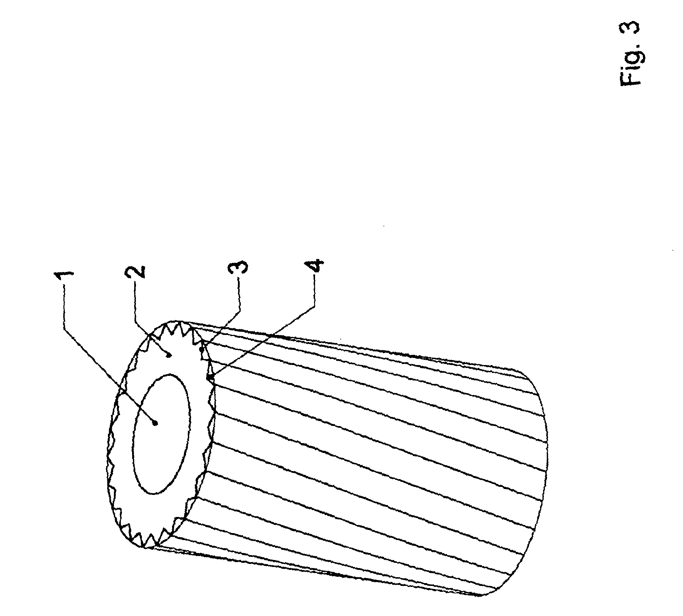

In Fig. 1 ist in schematischer Darstellung ein Querschnitt durch eine erfindungsgemäß ausgebildete Drahtelektrode gezeigt und in Fig. 2 die Drahtelektrode in Seitenansicht mit freigelegter strukturierter Fläche und Fig. 3 zeigt eine perspektivische Ansicht der fertiggestellten Drahtelektrode.

In der Fig. 1 bezeichnet 1 den Kern der Drahtelektrode, welcher aus Kupfer, Messing oder einer Verbundelektrode bestehen kann, die beispielsweise eine Stahlseele haben kann, welche von einer Kupferschicht umgeben ist. Auf diesem Kern 1 ist eine Mantelschicht 2 aufgebracht, deren Oberfläche strukturiert ist, wobei in den Fig. 2 und 3 diese Strukturierung als schraubenförmige Strukturierung ersichtlich ist. Diese schraubenförmige Strukturierung kann auch mit wesentlich höherer Steigung ausgeführt werden bis hin zu senkrecht zur Drahtachse verlaufenden Vertiefungen. Nach dem Fertigstellen der Mantelschicht 2 mit der strukturierten Oberfläche, beispielsweise aus einem β-Messing werden dann die Vertiefungen 3 in der Mantelschicht 2 durch Füllmaterial 4 aus einem Metall oder einer Metalllegierung ausgefüllt, welche entweder aus einem hoch zinkhaltigen γ-Messing oder aber auch aus reinem Zink bestehen kann. Des Weiteren ist es auch möglich, Zinklegierungen mit mehr als 90 % Zink einzusetzen. Voraussetzung ist lediglich, dass sich dieses Füllmaterial 4 sehr schnell beim Erodiervorgang verflüchtigt, so dass die strukturierte Oberfläche der eigentlichen Mantelschicht 2 für den folgenden Erodiervorgang zur Verfügung steht.

Die Spitzen zwischen den Vertiefungen bilden Orte erhöhter Feldstärke, so dass die Wahrscheinlichkeit groß ist, dass an diesen Spitzen die Entladungen stattfinden. Dies führt zu einer räumlichen Verteilung der zeitlich aufeinander folgenden Ladungen, so dass die Wahrscheinlichkeit groß ist, dass diese Entladungen häufiger von einem flüssigen Dielektrikum umgeben sind. Gleichermaßen wird durch die Strukturierung der Oberfläche der Austrag des erodierten Materials begünstigt. Besonders vorteilhaft hat sich eine noppenartige Struktur der Oberfläche der Mantelschicht herausgestellt.

### Bezugszeichenliste

- 1: Kern
- 2: Mantelschicht
- 3: Vertiefungen
- 4: Füllmaterial

## Patentansprüche

1. Drahtelektrode zum funkenerosiven Schneiden von Metallen, elektrisch leitender Keramik etc. mit entweder einem homogenen Kern (1) aus einem Metall oder einer Metalllegierung oder einem Verbundkern und mit mindestens einer beim Erodieren verschleißenden Mantelschicht (2),
**dadurch gekennzeichnet, dass**
die Oberfläche der äußeren Mantelschicht (2) strukturiert ausgebildet ist und dass die durch die Strukturierung geschaffenen Vertiefungen (3) mit einem Füllmaterial (4) aus einem leicht verdampfbaren Metall bzw. mit einer Metalllegierung zur Erzielung einer Oberfläche mit geringer Rauhtiefe ausgefüllt sind.

2. Drahtelektrode nach Anspruch 1, **dadurch gekennzeichnet, dass** das Füllmaterial (4) aus Zink oder einer Zinklegierung besteht.

3. Drahtelektrode nach Anspruch 1 oder 2, **dadurch gekennzeichnet, dass** das Füllmaterial (4) aus einem γ-Messing besteht.

4. Drahtelektrode nach einem der Ansprüche 1 bis 3, **dadurch gekennzeichnet, dass** die Vertiefungen größer als 2 µm und kleiner als 50 µm sind.

5. Drahtelektrode nach einem der Ansprüche 1 bis 4, **dadurch gekennzeichnet, dass** die Vertiefungen (3) ca. 15 µm aufweisen.

6. Drahtelektrode nach einem der Ansprüche 1 bis 5, **dadurch gekennzeichnet, dass** die Oberfläche der verschleißenden Mantelschicht (2) mit längs verlaufenden Rillen versehen ist.

7. Drahtelektrode nach einem der Ansprüche 1 bis 5, **dadurch gekennzeichnet, dass** die Oberfläche der verschleißenden Mantelschicht (2) mit quer verlaufenden Rillen versehen ist.

8. Drahtelektrode nach einem der Ansprüche 1 bis 5, **dadurch gekennzeichnet, dass** die Oberfläche der verschleißenden Mantelschicht (2) mit spiralförmig verlaufenden Rillen versehen ist.

9. Drahtelektrode nach einem der Ansprüche 1 bis 5, **dadurch gekennzeichnet, dass** die Oberfläche der verschleißenden Mantelschicht (2) noppenförmig ausgebildet ist.

10. Drahtelektrode nach einem der Ansprüche 1 bis 9, **dadurch gekennzeichnet, dass** die Mantelschicht (2) überwiegend aus β-Messing besteht, wobei der Anteil an β/β'-Phase in der Mantelschicht mindestens 60% beträgt.

11. Drahtelektrode nach einem der Ansprüche 1 bis 9, **dadurch gekennzeichnet, dass** das die β-Messing Mantelschicht (2) zumindest zu 90% aus β/β'-Phase besteht.

12. Drahtelektrode nach einem der Ansprüche 1 bis 11, **dadurch gekennzeichnet, dass** der Kern (1) aus Kupfer oder Messing besteht.

13. Drahtelektrode nach einem der Ansprüche 1 bis 11, **dadurch gekennzeichnet, dass** der Kern (1) ein Verbundkern mit einer Seele aus Stahl mit einer Kupfer- oder Messingbeschichtung ist.

## Claims

1. Wire electrode for spark erosion cutting of metals, electrically-conducting ceramics, etc., comprising either a homogeneous core (1) made of a metal or of a metal alloy or a composite core, and comprising at least one sheath coating (2) which wears during erosion, **characterised in that** the surface of the outer sheath coating (2) is structured and **in that** the indentations (3) created by the structure are filled in with a filler (4) made from an easily evaporated metal or a metal alloy for obtaining a surface with a low surface roughness.

2. Wire electrode according to claim 1, **characterised in that** the filler (4) comprises zinc or a zinc alloy.

3. Wire electrode according to either claim 1 or claim 2, **characterised in that** the filler (4) comprises a γ-brass.

4. Wire electrode according to any one of claims 1 to 3, **characterised in that** the indentations are larger than 2 µm and smaller than 50 µm.

5. Wire electrode according to any one of claims 1 to 4, **characterised in that** the indentations (3) are approximately 15 µm.

6. Wire electrode according to any one of claims 1 to 5, **characterised in that** the surface of the wearing sheath coating (2) comprises grooves extending longitudinally.

7. Wire electrode according to any one of claims 1 to 5, **characterised in that** the surface of the wearing sheath coating (2) comprises grooves extending transversely.

8. Wire electrode according to any one of claims 1 to 5, **characterised in that** the surface of the wearing sheath coating (2) comprises grooves extending helically.

9. Wire electrode according to any one of claims 1 to 5, **characterised in that** the surface of the wearing sheath coating (2) is knob-shaped.

10. Wire electrode according to any one of claims 1 to 9, **characterised in that** the sheath coating (2) predominantly comprises β-brass, wherein the fraction of β/β'-phase in the sheath coating is at least 60 %.

11. Wire electrode according to any one of claims 1 to 9, **characterised in that** the β-brass sheath coating (2) comprises at least 90 % β/β'-phase.

12. Wire electrode according to any one of claims 1 to 11, **characterised in that** the core (1) comprises copper or brass.

13. Wire electrode according to any one of claims 1 to 11, **characterised in that** the core (1) is a composite core comprising a steel heart with a copper coating or a brass coating.

## Revendications

1. Fil-électrode pour la coupe par électroérosion de métaux, de céramiques conductrices de l'électricité, etc.., comportant soit un noyau (1) homogène composé d'un métal ou d'un alliage métallique soit un noyau composite, et avec au moins une couche enveloppe (2) qui s'use lors de l'érosion,
**caractérisé en ce que**
la surface externe de la couche enveloppe extérieure (2) est réalisée structurée et **en ce que** les renfoncements (3) créés par la structuration sont remplis avec un matériau de remplissage (4) ou avec un alliage métallique pour obtenir une surface externe présentant une faible profondeur de rugosité.

2. Fil-électrode suivant la revendication 1, **caractérisé en ce que** le matériau de remplissage (4) est composé de zinc ou d'un alliage de zinc.

3. Fil-électrode suivant la revendication 1 ou 2, **caractérisé en ce que** le matériau de remplissage (4) est composé d'un laiton γ.

4. Fil-électrode suivant l'une des revendications 1 à 3, **caractérisé en ce que** les renfoncements sont plus grands que 2 µm et plus petits que 50 µm.

5. Fil-électrode suivant l'une des revendications 1 à 4, **caractérisé en ce que** les renfoncements (3) présentent environ 15 µm.

6. Fil-électrode suivant l'une des revendications 1 à 5, **caractérisé en ce que** la surface externe de la couche enveloppe (2) à user est munie de rayures dirigées longitudinalement.

7. Fil-électrode suivant l'une des revendications 1 à 5, **caractérisé en ce que** la surface externe de la couche enveloppe (2) à user est munie de rayures dirigées transversalement.

8. Fil-électrode suivant l'une des revendications 1 à 5, **caractérisé en ce que** la surface externe de la couche enveloppe (2) à user est munie de rayures en forme de spirales.

9. Fil-électrode suivant l'une des revendications 1 à 5, **caractérisé en ce que** la surface externe de la couche enveloppe (2) à user est réalisée sous forme de nopes.

10. Fil-électrode suivant l'une des revendications 1 à 9, **caractérisé en ce que** la couche enveloppe (2) est composée principalement de laiton β, la proportion des phases β/β' dans la couche enveloppe (2) étant d'au moins 60%.

11. Fil-électrode suivant l'une des revendications 1 à 9, **caractérisé en ce que** la couche enveloppe (2) de laiton β est constituée d'au moins 90% de phases β/β'.

12. Fil-électrode suivant l'une des revendications 1 à 11, **caractérisé en ce que** le noyau (1) est composé de cuivre ou de laiton.

13. Fil-électrode suivant l'une des revendications 1 à 11, **caractérisé en ce que** le noyau (1) est un noyau composite comportant une âme d'acier recouvert par une couche de cuivre ou de laiton.
